# FASCICULE DE BREVET EUROPEEN

(11) **EP 0 861 486 B1**
(45) Date de publication et mention de la délivrance du brevet: **08.09.1999**
(21) Numéro de dépôt: 96938296.9
(22) Date de dépôt: 12.11.1996
(51) Int. Cl.: G10K 11/178, G01V 1/28

(54) **PROCEDE ET DISPOSITIF D'EXTRACTION D'UN SIGNAL ACOUSTIQUE UTILE A PARTIR D'UN SIGNAL ACOUSTIQUE COMPOSITE COMPRENANT DES COMPOSANTES PARASITES**
VERFAHREN UND VORRICHTUNG ZUM ABLEITEN EINES AKUSTISCHEN NUTZSIGNALS AUS EINEM ZUSAMMENGESETZTEN,PARASITÄRKOMPONENTEN ENTHALTENDEM SIGNAL
METHOD AND DEVICE FOR RECOVERING A WANTED ACOUSTIC SIGNAL FROM A COMPOSITE ACOUSTIC SIGNAL INCLUDING INTERFERENCE COMPONENTS

(30) Priorité: 13.11.1995 FR 9513407
(43) Date de publication de la demande: 02.09.1998
(73) Titulaire: TECHNOFIRST, 13400 Aubagne (FR)
(72) Inventeur: CARME, Christian, F-13008 Marseille (FR); ROURE, Alain, F-13011 Marseille (FR)
(74) Mandataire: Bratel, Gérard
(86) Numéro de dépôt international: FR9601781
(87) Numéro de publication internationale: WO9718550

(56) Documents cités:
- EP-A- 0 525 456
- GB-A- 2 273 359
- US-A- 4 630 304
- SPEECH PROCESSING, MINNEAPOLIS, APR. 27 - 30, 1993, vol. 2 OF 5, 27 Avril 1993, INSTITUTE OF ELECTRICAL AND ELECTRONICS ENGINEERS, pages II-351-354, XP000427798 ZANGI K C: "A NEW TWO-SENSOR ACTIVE NOISE CANCELLATION ALGORITHM"

## Description

La présente invention concerne l'extraction d'un signal acoustique utile à partir d'un signal acoustique composite comprenant des composantes parasites.

Elle trouve une application dans le traitement d'un signal acoustique composite comprenant un signal acoustique utile, par exemple la voix que l'on veut enregistrer, et des composantes parasites provenant d'une source de bruit quelconque (bruit de machine ou de véhicule,...), lesdites composantes parasites étant susceptibles de perturber l'enregistrement de la voix.

On sait déjà annuler des composantes parasites contenues dans un signal acoustique composite.

Par exemple, le Brevet GB-A-2273359 décrit un dispositif de traitement d'un signal acoustique utile pour se débarrasser de ses composantes parasites. Deux géophones captent le même signal composite constitué du signal utile et de ses composantes parasites. Un retard dépendant de la nature du signal utile et de la distance entre les deux capteurs est attribué à l'un des signaux ainsi capté et les signaux sont soustraits ensuite pour extraire le signal utile débarrassé de ses composantes parasites.

Un tel dispositif est de mise en oeuvre compliquée et limitée en raison du retard à attribuer à la propagation des signaux, des contraintes géométriques liées à l'emplacement des capteurs et des limitations de filtrage liées à la nature du signal utile à traiter.

On sait aussi utiliser des caractéristiques relatives aux composantes parasites à annuler (densité spectrale et largeur de bande par exemple), ainsi qu'au signal acoustique utile à traiter (périodicité et distribution).

Toutefois, l'accès a l'ensemble de ces caractéristiques est de mise en place onéreuse et difficile, voire parfois impossible lorsque le bruit parasite est aléatoire, susceptible de varier dans le temps, en niveau et en fréquence, et/ou s'étend sur une large bande de fréquences et que l'on n'a pas non plus de connaissance a priori des caractéristiques du signal acoustique utile.

La présente invention apporte justement une solution à ce problème.

Elle vise à fournir un extracteur d'un signal acoustique utile à partir d'un signal acoustique composite comprenant des composantes parasites, qui peuvent être de tout type, même aléatoire et large bande, et qui sont susceptibles de perturber le traitement du signal acoustique utile pour lequel on a aucune connaissance a priori.

Elle porte sur un dispositif d'extraction d'un signal acoustique utile à partir d'un signal acoustique composite comprenant des composantes parasites, comportant :
- des premiers moyens capteurs, disposés à un premier endroit choisi et propres à capter le signal acoustique composite,
- des seconds moyens capteurs, disposés à un second endroit choisi selon une relation géométrique prédéterminée par rapport au premier endroit, et propres à capter, en temps réel, un signal acoustique de référence, sensiblement corrélé avec les composantes parasites du signal acoustique composite et susceptible de se propager dudit second endroit vers ledit premier endroit,
- des moyens de filtrage de type adaptatif possédant une première entrée reliée aux seconds moyens capteurs, une seconde entrée et une sortie, et
- des moyens d'extraction possédant une première entrée reliée aux premiers moyens capteurs, une seconde entrée reliée à la sortie des moyens de filtrage adaptatif, et une sortie reliée à la seconde entrée des moyens de filtrage adaptatif.

Selon une définition générale de l'invention, le second endroit est choisi de telle sorte que le signal acoustique de référence ne contienne pas d'informations liées au signal utile, et les moyens de filtrage sont aptes à minimiser l'énergie du signal acoustique composite en fonction de l'énergie du signal acoustique de référence, en adaptant en temps réel au moins certains coefficients de filtrage, jusqu'à ce que le signal issu de la sortie des moyens d'extraction corresponde sensiblement au signal acoustique utile dépourvu sélectivement des composantes parasites.

L'invention a également pour objet un procédé d'extraction d'un signal acoustique utile débarrassé de ses composantes parasites, mis en oeuvre par le dispositif d'extraction mentionné ci-avant dans lequel le procédé comprend les étapes suivantes :
- a) prévoir des premiers moyens capteurs, disposés à un premier endroit choisi et propres à capter le signal acoustique composite,
- b) prévoir des seconds moyens capteurs, disposés à un second endroit choisi selon une relation géométrique prédéterminée par rapport au premier endroit, et propres à capter, en temps réel, un signal acoustique de référence, sensiblement corrélé avec les composantes parasites du signal composite et susceptible de se propager dudit second endroit vers ledit premier endroit,
- c) prevoir des moyens de filtrage de type adaptatif possédant une premiere entrée reliée aux seconds moyens capteurs, une seconde entrée, et une sortie,
- d) prévoir des moyens d'extraction possédant une première entrée reliée aux premiers moyens capteurs, une seconde entrée reliée a la sortie des moyens de filtrage, et une sortie.

Selon une caractéristique importante du procédé selon l'invention, le second endroit est choisi de telle sorte que le signal de référence ne contienne pas d'informations liées au signal utile, et le procédé comprend une étape consistant à :
- e) minimiser l'énergie du signal acoustique composite en fonction de l'énergie du signal acoustique de référence, en adaptant en temps réel au moins certains coefficients de filtrage jusqu'à ce que le signal issu de la sortie des moyens d'extraction corresponde sensiblement au signal acoustique utile dépourvu sélectivement des composantes parasites.

D'autres caractéristiques et avantages de l'invention apparaîtront à la lumière de la description détaillée ci-après et des dessins annexés dans lesquels :
- la figure 1 représente schématiquement l'architecture des éléments constitutifs du dispositif selon l'invention, avec des moyens sommateurs analogiques ;
- la figure 2 est un schéma fonctionnel des éléments de la figure 1 ;
- la figure 3 est une représentation schématique de l'architecture des éléments constitutifs du dispositif selon l'invention, avec des moyens sommateurs numériques ; et
- la figure 4 est un schéma fonctionnel des eléments de la figure 3.

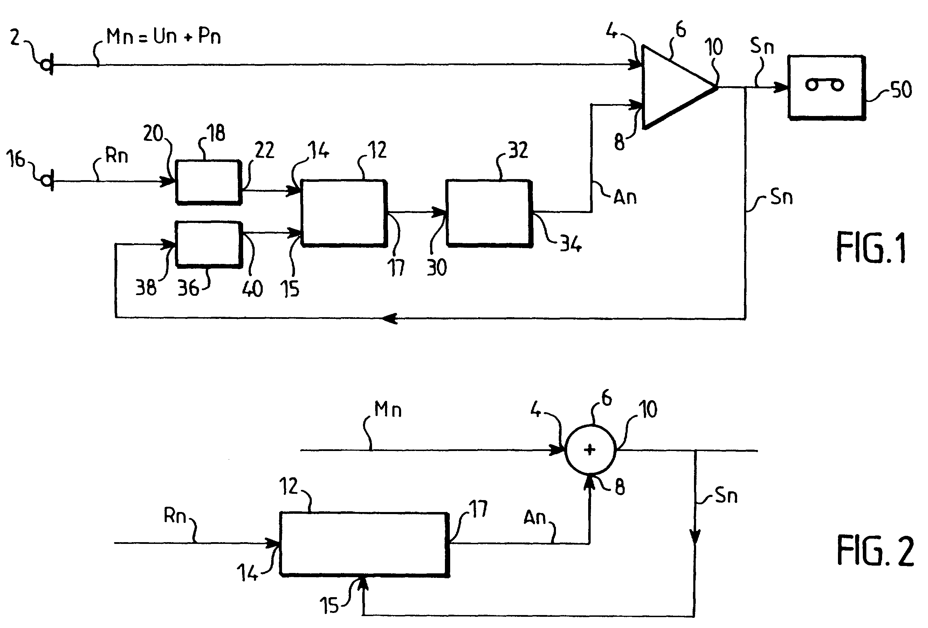

Sur la figure 1, un capteur 2 est disposé à un endroit choisi pour capter, en temps réel, un signal acoustique composite Mn à traiter. Ce signal composite est constitué d'un signal utile Un et des composantes parasites Pn. Le signal utile Un est par exemple la voix d'une personne que l'on veut enregistrer. Les caractéristiques du signal acoustique utile et des composantes parasites ne sont pas connues, a priori. Les composantes parasites peuvent provenir d'une source de bruit quelconque, disposée à une certaine distance du capteur 2.

Le signal Mn capté par le capteur 2 est ici un signal de type analogique.

De préférence, le capteur 2 est un microphone omnidirectionnel, afin de capter le signal composite.

Bien entendu, tout capteur capable de détecter un signal acoustique ou sa représentation peut s'appliquer à l'invention.

En référence aux figures 1 et 2, le signal composite Mn est appliqué à la première entrée positive 4 d'un élément sommateur 6, de type analogique, qui effectuera l'extraction du signal acoustique utile à partir du signal acoustique composite, comme on le verra plus en détail ci-après.

Par exemple, l'élément sommateur est un amplificateur opérationnel tel que celui vendu par la société TEXAS INSTRUMENTS, sous la référence TLE 2061, agencé ici pour que les signaux appliqués à ces deux entrées présentent sensiblement un même niveau dynamique afin de permettre une extraction optimale.

L'élément sommateur 6 comprend une seconde entrée positive 8 recevant un signal An issu de la sortie 17 de moyens de filtrage adaptatif 12 via des moyens de restitution 32, que l'on décrira plus en détail ci-après. Le signal An est ici également analogique.

L'élément sommateur effectue la somme des signaux analogiques Mn et An et délivre à sa sortie 10, un signal analogique Sn représentatif de ladite somme des signaux Mn et An.

Les moyens de filtrage adaptatif 12 comprennent une première entrée 14 recevant le signal issu d'un second capteur 16. Ce capteur 16 fournit un signal acoustique de référence Rn, qui est fortement corrélé avec les composantes parasites Pn à annuler. Les moyens de filtrage comprennent une seconde entrée 15 que l'on décrira plus en détail ci-après.

Avantageusement, Le signal acoustique de référence Rn ne contient pas d'informations liées au signal utile Un. Il est aussi ici analogique.

Le capteur 16 est disposé à un endroit choisi selon une relation géométrique particulière par rapport à la source de bruit (non représentée).

Par exemple, le capteur 16 est disposé à proximité de la source de bruit parasite.

Le capteur 16 est par exemple un microphone directif, afin de capter le signal acoustique parasite issu de la source de bruit parasite.

Bien entendu, d'autres transducteurs sont susceptibles de s'appliquer à la capture du signal de référence. La seule contrainte est ici de capter en temps réel un signal acoustique de référence susceptible de se propager de l'endroit où est disposé le capteur 16 vers l'endroit où est disposé le capteur 2.

Il y a lieu de noter ici que la désignation "signal acoustique de référence" ne signifie pas "signal acoustique issu d'une référence synchrone". Le signal acoustique de référence est ici un signal acoustique capté par un microphone et qui va servir de référence pour le traitement du signal. Il n'est pas issu d'une référence synchrone. Il ne correspond pas non plus à l'inverse du bruit à atténuer.

On sait que le principe de l'atténuation active est basé sur le fait que la vitesse de propagation des sons est plus lente que la vitesse de propagation de l'électricité. Pour respecter ce retard temporel, il convient d'établir une distance minimale séparant le capteur 2 et le capteur 16. Cette distance minimale est de moins de 0,5 m à 2 m pour des bruits de large bande spectrale ou des raies.

Jusqu'à présent, en référence à la figure 2, on a décrit les fonctions essentielles assurées par les moyens de filtrage adaptatif 12 et les moyens sommateurs analogiques 6. En référence à la figure 1, la structure du dispositif selon l'invention est complétée par un étage d'acquisition en amont des moyens de filtrage adaptatif et par un étage de restitution monté en aval des moyens de filtrage adaptatif.

Plus précisément, l'étage amont comprend des moyens d'acquisition analogique/numérique 18 qui reçoivent le signal de référence Rn. Ces moyens d'acquisition comprennent en série, un élément pré-amplificateur d'entrée (non représenté), un filtre de conditionnement (non représenté) et un convertisseur analogique/numérique (non représenté).

L'élément pré-amplificateur possède une entrée 20 recevant les signaux issus du capteur 16 et une sortie. Le filtre de conditionnement possède une entrée reliée à la sortie de l'élément pré-amplificateur et une sortie. Le convertisseur analogique/numérique possède une entrée reliée à la sortie du filtre de conditionnement et une sortie 22 appliquée à l'entrée 14 d'un processeur de signal numérique 12 qui assure le filtrage adaptatif.

Le filtre de conditionnement est avantageusement un filtre d'anti-recouvrement d'une fréquence de coupure choisie selon l'application. Par exemple, la fréquence de coupure est égale à 2142 Hz pour l'atténuation de bruit émanant d'un compresseur (raies).

Le processeur 12, appelé encore DSP pour DIGITAL SIGNAL PROCESSOR, est par exemple celui vendu par la société TEXAS INSTRUMENTS sous la référence TMS320C25.

La sortie 17 du processeur est appliquée à l'entrée 30 d'un module de restitution 32 qui comprend, en série, un convertisseur numérique/analogique (non représenté) et un filtre de lissage (non représenté).

Par exemple, le filtre de lissage est un filtre de type passe-bas dont l'entrée reçoit le signal sortant du convertisseur numérique/analogique et dont la sortie 34 est reliée à la seconde entrée 8 des moyens sommateurs 6.

La sortie 34 du module de restitution numérique/analogique délivre le signal An.

La fréquence d'échantillonnage des convertisseurs analogiques/numériques et numériques/analogiques est choisie de telle sorte que l'échantillonnage des signaux acoustiques est possible pendant le temps nécessaire à la propagation du signal acoustique de référence de l'endroit où il est capté à l'endroit où il vient entacher le signal acoustique utile.

La fréquence de coupure des filtres de conditionnement et de lissage est choisie relativement élevée dans le cas d'un bruit aléatoire, puisque le retard de l'électronique augmente lorsque la valeur de la fréquence de coupure diminue.

Par exemple, pour une fréquence de coupure de l'ordre de 2000 Hz et une fréquence d'échantillonnage de 5000 Hz, la distance minimale entre les capteurs 2 et 16 est de 0,4m.

Par exemple, pour une fréquence de coupure de l'ordre de 800 Hz et une fréquence d'échantillonnage de 2000 Hz, la distance minimale entre les capteurs 2 et 16 est de 1m.

Dans le cas d'un bruit sourd et grave qui correspond à des fréquences inférieures à celles de la voix, il est possible de choisir, avec des moyens sommateurs de type analogique, des fréquences d'échantillonnage relativement basses, c'est-à-dire de l'ordre de 2 à 5 kHz.

Le processeur 12 reçoit à sa seconde entrée 15 un signal issu d'un autre module d'acquisition 36 dont l'entrée 38 reçoit un signal issu de la sortie 10 des moyens sommateurs 6, c'est-à-dire le signal Sn. Ce second module d'acquisition 36 comprend une sortie 40 appliquée à l'entrée 15 du processeur 12.

En pratique, le module d'acquisition 36 comprend les mêmes éléments que le module d'acquisition 18, à savoir, en série, un pré-amplificateur d'entrée, un filtre de conditionnement et un convertisseur analogique/numérique.

Selon l'invention, le processeur 12 pilote un algorithme pour minimiser l'énergie du signal acoustique composite Mn en fonction de l'énergie du signal acoustique de référence Rn jusqu'à ce que le signal acoustique Sn issu de la sortie des moyens sommateurs, corresponde sensiblement au signal acoustique utile Un dépourvu sélectivement des composantes parasites Pn.

L'algorithme de minimisation est de préférence celui appelé LMS pour LEAST MEAN SQUARE ou des moindres carrés moyens.

Selon le principe de l'atténuation active, le signal An doit correspondre à l'amplitude du signal Pn mais en opposition de phase par rapport à celui-ci.

Le signal An est obtenu grâce à l'acquisition du signal Rn, et du signal Sn.

La somme des signaux Mn et An permet d'en déduire le signal Un.

A l'instant t, le processeur 12 détermine les coefficients de pondération W pour minimiser l'énergie du signal Sn jusqu'à ce qu'elle corresponde à celle du signal utile Un.

Par exemple, le nombre de coefficients de pondération W est de 90.

Le signal Sn correspond ici au signal composite débruité. Ce dernier peut être enregistré à l'aide d'un enregistreur approprié 50 sur une bande audio, ou attaquer un haut-parleur par l'intermédiaire d'un amplificateur de puissance (non représentés).

Il est à remarquer que le signal Sn est en fait le signal à minimiser.

Dans ces conditions, le signal Sn est réinjecté dans l'entrée 15 des moyens de filtrage qui adaptent les coefficients du filtre W pour calculer le signal An à l'instant t+1.

L'opération de minimisation est répétée pour tous les échantillons des signaux Rn et Sn, acquis selon l'invention.

Il y a lieu de remarquer que le dispositif d'atténuation active selon l'invention, constitue un filtrage par anticipation (Feed forward) simplifié, dans lequel la source de contre-bruit ne possède pas d'actionneur mécanique ou acoustique.

La suppression de l'actionneur mécanique ou acoustique de la source de contre-bruit simplifie ici les calculs dans la mesure où la fonction de transfert est maintenant égale au chemin entre la sortie 17 du processeur jusqu'à l'entrée 15 dudit processeur, via le bloc de restitution 32, les moyens sommateur 6 et le bloc d'acquisition 36. Ce chemin est donc uniquement constitué d'éléments électroniques dans lesquels la propagation du signal électrique est très rapide face à la propagation des ondes sonores. Avec une fonction de transfert aussi courte, il en résulte un gain considérable en temps de calcul par rapport à un filtrage par anticipation avec une source de contre-bruit équipée d'un actionneur mécanique ou acoustique.

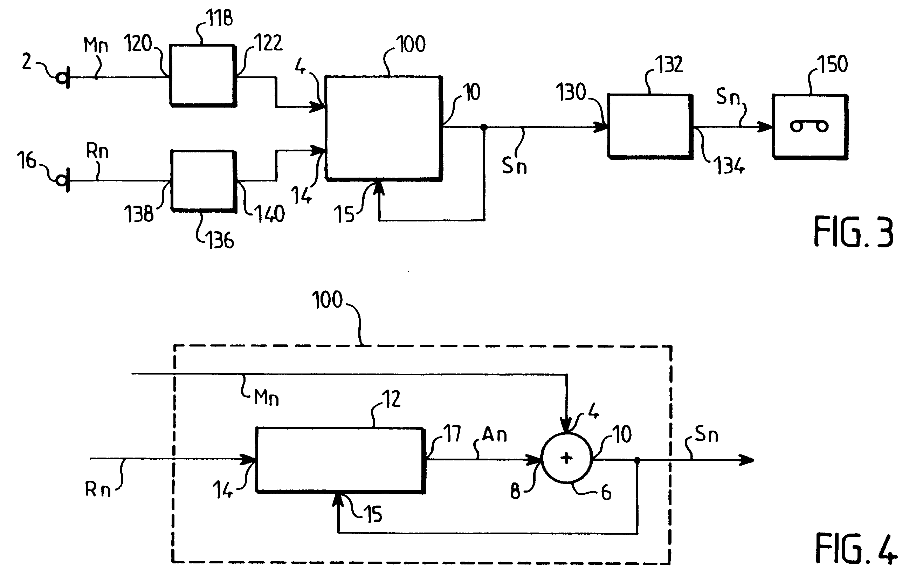

En référence à la figure 3, on a représenté une variante de l'architecture du dispositif selon l'invention, dans laquelle le sommateur des signaux Mn et An est maintenant numérique, au lieu d'être analogique comme en référence aux figures 1 et 2. Dans ces conditions, il est prévu des moyens de traitement numérique 100 qui assurent les fonctions des moyens sommateurs numériques 6 et des moyens de filtrage adaptatif 12 décrits précédemment.

En pratique, les moyens de traitement numérique possèdent une première entrée 4 qui correspond à l'entrée 4 des moyens sommateurs décrits en référence aux figures 1 et 2, une seconde entrée 14 qui correspond à la première entrée 14 des moyens de filtrage 12 décrits en référence aux figures 1 et 2, une troisième 15 entrée qui correspond à la seconde entrée 15 des moyens de filtrage 12 décrits en référence aux figures 1 et 2, et une sortie 17 qui correspond à la sortie 17 des moyens de filtrage 12 décrits en référence aux figures 1 et 2.

Il y a lieu de noter que la troisième entrée 15 est ici virtuelle dans le cas du sommateur numérique, puisque la valeur numérique du signal Sn, correspondant à la somme des signaux Mn et An, est connue du processeur.

D'une manière sensiblement similaire à la version en analogique, le dispositif en numérique comprend en outre un étage d'acquisition comprenant des troisièmes moyens d'acquisition analogique/numérique 118 possédant une entrée 120 reliée aux premiers moyens capteurs 2, et une sortie 122 reliée à la première entrée 4 des moyens de traitement numérique 100; et des quatrièmes moyens d'acquisition analogique/numérique 136 possédant une entrée 138 reliée aux seconds moyens capteurs 16, et une sortie 140 reliée à la seconde entrée 14 des moyens de traitement numérique 100.

Les signaux Mn et Rn sont appliqués l'un et l'autre au processeur numérique 100, via les modules d'acquisition respectifs 118 et 136. La sortie 17 du processeur 100 délivrant le signal numérique Sn, est appliquée à l'entrée 130 d'un bloc de restitution 132 qui restitue analogiquement le signal Sn vers un dispositif de traitement du signal utile, par exemple un bloc enregistreur 150.

En référence à la figure 4, on a représenté la fonction assuré par le processeur 100 en ce qui concerne la somme des signaux Mn et An.

Cette opération est assuré par des moyens sommateurs numériques 6 contenus dans le processeur DSP. Le traitement réalisé par le processeur 100 consiste à faire la somme du signal Mn appliqué à l'entrée 4 des moyens sommateurs 6 et du signal An appliqué à l'entrée 8 desdits moyens sommateurs 6. La sortie 10 des moyens sommateurs 6 délivre le signal Sn correspondant au signal débruité. La sortie 10 est reliée à l'entrée 15 des moyens de filtrage adaptatif pour réinjecter le signal Sn afin de calculer le signal An à l'instant t+1. Le signal An est délivrée par la sortie 17 des moyens de filtrage pour être appliquée à l'entrée 8 des sommateurs 6.

Comme décrit précédemment en référence aux figures 1 et 2, le processeur selon l'invention détermine les coefficients du filtre adaptatif W afin de générer un signal An qui, additionné au signal Mn, va atténuer les composantes relatives au signal parasite Pn jusqu'à ce que l'énergie du signal Sn corresponde sensiblement à l'énergie du signal utile Un.

En pratique, le signal numérique Sn issu du processeur 100 est transformé en un signal analogique grâce à un module de restitution numérique/analogique 132 similaire à celui décrit en référence à la figure 1.

Avec des sommateurs numériques, la suppression des actionneurs acoustiques ou mécaniques de la source de contre-bruit simplifie encore davantage les calculs dans la mesure où la fonction de transfert est maintenant égale à celle du chemin électronique entre l'entrée 15 et la sortie 17 dans le processeur, c'est-à-dire égale à 1.

Il y a lieu de remarquer que le traitement ne minimise que les composantes liées au signal parasite Pn. Par conséquent, le chevauchement des bandes d'énergie des signaux Pn et Un n'est pas gênant.

A la différence du dispositif analogique décrit en référence aux figures 1 et 2, le signal Mn est numérisé. Dans ces conditions, il est nécessaire d'adapter la fréquence d'échantillonnage du traitement au signal utile, et du signal parasite. Si l'on ne souhaite pas perdre d'informations liées au signal utile Un, il convient de travailler à des fréquences d'échantillonnage assez élevées, de l'ordre de 40 à 50 kHz par exemple pour couvrir toute la bande audio s'étalant de 20 Hz à 20 kHz. Dans ces conditions, il est nécessaire d'utiliser des processeurs et des convertisseurs très rapides pour effectuer les acquisitions et les calculs.

Selon un autre mode de réalisation de l'invention, pour la version analogique ou numérique, il est prévu d'ajouter sur la voie de référence, c'est à dire celle associée avec le capteur 16, un contrôle automatique de gain.

Ce contrôleur peut remplacer ou venir en complément à la préamplification dans le module d'acquisition analogique/numérique associé à l'acquisition du signal acoustique de référence.

Ce contrôleur a pour fonction de fournir la même amplitude au signal de référence qu'elle que soit l'amplitude du signal d'entrée.

Ainsi, en présence d'un bruit parasite fort ou faible, le processeur traite un bruit de référence de même amplitude. Il en résulte une meilleure dynamique pour le traitement du signal.

La présente invention a également pour objet un procédé d'extraction d'un signal acoustique utile Un à partir d'un signal acoustique composite Mn comprenant des composantes parasites Pn.

D'une manière générale,, le procédé comprend les étapes suivantes:
- a) prévoir des premiers moyens capteurs 2, disposés à un premier endroit choisi et propres à capter le signal acoustique composite Mn,
- b) prévoir des seconds moyens capteurs 16, disposés à un second endroit choisi selon une relation géométrique prédéterminée par rapport au premier endroit, et propres à capter, en temps réel, un signal acoustique de référence Rn, sensiblement corrélé avec les composantes parasites Pn du signal composite Mn et susceptible de se propager dudit second endroit vers ledit premier endroit,
- c) prévoir des moyens de filtrage 12 possédant au moins une première entrée 14 reliée aux seconds moyens capteurs 16, et une sortie 17,
- d) prévoir des moyens d'extraction 6 possédant une première entrée 4 reliée aux premiers moyens capteurs 2, une seconde entrée 8 reliée à la sortie 17 des moyens de filtrage 12, et une sortie 10, et
- e) déterminer au moins certains coefficients des moyens de filtrage 12 jusqu'à ce que le signal Sn issu de la sortie 10 des moyens d'extraction corresponde sensiblement au signal acoustique utile Un dépourvu sélectivement des composantes parasite Pn.

Le plus souvent, les moyens de filtrage 12 sont de type adaptatif avec une seconde entrée 15 reliée à la sortie 10 des moyens d'extraction 6, comme ceux décrits en référence aux figures 1 à 4

Dans ces conditions, l'étape e) selon l'invention, consiste à l'étape suivante:
- e1) adapter au moins certains coefficients des moyens de filtrage 12, en temps réel, selon un algorithme choisi pour minimiser l'énergie du signal acoustique composite Mn en fonction de l'énergie du signal acoustique de référence Rn, jusqu'à ce que le signal Sn issu de la sortie 10 des moyens d'extraction 6 corresponde sensiblement au signal acoustique utile Un dépourvu sélectivement des composantes parasites Pn.

## Revendications

1. Dispositif d'extraction d'un signal acoustique utile (Un) à partir d'un signal acoustique composite (Mn) comprenant des composantes parasites (Pn), le dispositif comprenant :
- des premiers moyens capteurs (2), disposés à un premier endroit choisi et propres à capter le signal acoustique composite (Mn),
- des seconds moyens capteurs (16), disposés à un second endroit choisi selon une relation géométrique prédéterminée par rapport au premier endroit, et propres à capter, en temps réel, un signal acoustique de référence (Rn), sensiblement corrélé avec les composantes parasites (Pn) du signal acoustique composite (Mn) et susceptible de se propager dudit second endroit vers ledit premier endroit,
- des moyens de filtrage de type adaptatif (12) possédant une première entrée (14) reliée aux seconds moyens capteurs (16), une seconde entrée (15) et une sortie (17), et
- des moyens d'extraction (6) possédant une première entrée (4) reliée aux premiers moyens capteurs (2), une seconde entrée (8) reliée à la sortie (17) des moyens de filtrage (12), et une sortie (10) reliée à la seconde entrée (15) des moyens de filtrage (12), caractérisé en ce que le second endroit est choisi de telle sorte que le signal acoustique de référence (Rn) ne contienne pas d'informations liées au signal utile (Un) et en ce que les moyens de filtrage (12) sont aptes à minimiser l'énergie du signal acoustique composite (Mn) en fonction de l'énergie du signal acoustique de référence (Rn), en adaptant en temps réel au moins certains coefficients de filtrage, jusqu'à ce que le signal (Sn) issu de la sortie (10) des moyens d'extraction (6) corresponde sensiblement au signal acoustique utile (Un) dépourvu sélectivement des composantes parasites (Pn).

2. Dispositif selon la revendication 1, caractérisé
en ce que les moyens d'extraction (6) sont des moyens sommateurs de type analogique,
en ce qu'il comprend en outre un étage d'acquisition comprenant des premiers moyens d'acquisition analogique/numérique (18) possédant une entrée (20) reliée aux seconds moyens capteurs (16), et une sortie (22) reliée à la première entrée des moyens de filtrage adaptatif (12); et des seconds moyens d'acquisition analogique/numérique (36) possédant une entrée (38) reliée à la sortie (10) des moyens sommateurs analogiques (6), et une sortie (40) reliée à la seconde entrée (15) des moyens de filtrage adaptatif (12), et
en ce qu'il comprend en outre un étage de restitution comprenant des premiers moyens de restitution numérique/analogique (32) possédant une entrée (30) reliée à la sortie (17) des moyens de filtrage adaptatif (12) et une sortie (34) délivrant un signal (An) appliqué à la seconde entrée (8) des moyens sommateurs analogiques (6).

3. Dispositif selon la revendication 1, caractérisé
en ce que les moyens d'extraction (6) sont des moyens sommateurs de type numérique;
en ce qu'il comprend des moyens de traitement numérique (100) possédant des première (4), seconde (14) et troisième (15) entrées, et une sortie (10), lesdits moyens de traitement numérique (100) étant propres à assurer les fonctions des moyens sommateurs numériques (6) et des moyens de filtrage adaptatif (12),
en ce qu'il comprend en outre un étage d'acquisition comprenant des troisièmes moyens d'acquisition analogique/numérique (118) possédant une entrée (120) reliée aux premiers moyens capteurs (2), et une sortie (122) reliée à la première entrée (4) des moyens de traitement numérique (100); et des quatrièmes moyens d'acquisition analogique/numérique (136) possédant une entrée (138) reliée aux seconds moyens capteurs (16), et une sortie (140) reliée à la seconde entrée (14) des moyens de traitement numérique (100).

4. Dispositif selon la revendication 3, caractérisé en ce qu'il comprend en outre un étage de restitution comprenant des seconds moyens de restitution numérique/analogique (132) possédant une entrée (130) reliée à la sortie (10) des moyens de traitement numérique (100) et une sortie (134).

5. Dispositif selon l'une des revendications précédentes, caractérisé en ce que les moyens de filtrage numérique (12) sont du type processeur de signal numérique et en ce que l'algorithme de minimisation est du type des moindres carrés moyens.

6. Procédé d'extraction d'un signal acoustique utile (Un) à partir d'un signal acoustique composite (Mn) comprenant des composantes parasites (Pn), le procédé comprenant les étapes suivantes:
- a) prévoir des premiers moyens capteurs (2), disposés à un premier endroit choisi et propres à capter le signal acoustique composite (Mn),
- b) prévoir des seconds moyens capteurs (16), disposés à un second endroit choisi selon une relation géométrique prédéterminée par rapport au premier endroit, et propres à capter, en temps réel, un signal acoustique de référence (Rn), sensiblement corrélé avec les composantes parasites (Pn) du signal composite (Mn) et susceptible de se propager dudit second endroit vers ledit premier endroit,
- c) prévoir des moyens de filtrage (12) de type adaptatif possédant une première entrée (14) reliée aux seconds moyens capteurs (16), une seconde entrée (15), et une sortie (17),
- d) prévoir des moyens d'extraction (6) possédant une première entrée (4) reliée aux premiers moyens capteurs (2), une seconde entrée (8) reliée à la sortie (17) des moyens de filtrage (12), et une sortie (10), ledit procédé étant caractérisé par le fait que le second endroit est choisi de telle sorte que le signal de référence (Rn) ne contienne pas d'informations liées au signal utile (Un), et en ce qu'il comprend une étape consistant à :
- e) minimiser l'énergie du signal acoustique composite (Mn) en fonction de l'énergie du signal acoustique de référence (Rn), en adaptant en temps réel au moins certains coefficients de filtrage jusqu'à ce que le signal (Sn) issu de la sortie (10) des moyens d'extraction (6) corresponde sensiblement au signal acoustique utile (Un) dépourvu sélectivement des composantes parasites (Pn).

## Patentansprüche

1. Vorrichtung zum Ableiten eines akustischen Nutzsignals (Un) aus einem zusammengesetzten akustischen Signal (Mn), das Parasitärkomponenten (Pn) enthält, umfassend:
- erste Auffangmittel (2), die an einer ersten gewählten Stelle angeordnet sind und in der Lage sind, das zusammengesetzte akustische Signal (Mn) aufzufangen,
- zweite Auffangmittel (16), die an einer zweiten Stelle angeordnet sind, die entsprechend einer vorbestimmten geometrischen Relation in bezug auf die erste Stelle gewählt wird, und die in der Lage sind, in Echtzeit ein akustisches Referenzsignal (Rn) aufzufangen, das annähernd mit den Parasitärkomponenten (Pn) des zusammengesetzten akustischen Signals (Mn) korreliert ist und in der Lage ist, sich von der genannten zweiten Stelle zu der genannten ersten Stelle auszubreiten,
- Filtermittel vom Anpassungstyp (12) mit einem ersten Eingang (14), der mit den zweiten Auffangmitteln (16) verbunden ist, einem zweiten Eingang (15) und einem Ausgang (17), und
- Ableitungsmittel (6) mit einem ersten Eingang (4), der mit den ersten Auffangmitteln (2) verbunden ist, einem zweiten Eingang (8), der mit dem Ausgang (17) der Filtermittel (12) verbunden ist, und einem Ausgang (10), der mit dem zweiten Eingang (15) der Filtermittel (12) verbunden ist, dadurch gekennzeichnet, daß die zweite Stelle so gewählt wird, daß das akustische Referenzsignal (Rn) keine mit dem Nutzsignal (Un) zusammenhängenden Informationen enthält und daß die Filtermittel (12) in der Lage sind, die Energie des zusammengesetzten akustischen Signals (Mn) in Abhängigkeit von der Energie des akustischen Referenzsignals (Rn) zu minimieren, indem sie in Echtzeit zumindest einige Filterkoeffizienten anpassen, bis das Signal (Sn), das aus dem Ausgang (10) der Ableitungsmittel (6) hervorgeht, annähemd dem akustischen Nutzsignal (Un) entspricht, das auf selektive Weise keine Parasitärkomponenten (Pn) enthält.

2. Vorrichtung nach Anspruch 1, dadurch gekennzeichnet,
daß die Ableitungsmittel (6) Summiermittel vom analogen Typ sind,
daß sie darüber hinaus eine Aufnahmestufe enthält, umfassend erste Analog/Digital-Aufnahmemittel (18) mit einem Eingang (20), der mit den zweiten Auffangmitteln (16) verbunden ist, und einem Ausgang (22), der mit dem ersten Eingang der Anpassungs-Filtermittel (12) verbunden ist; und zweite Analog/Digital-Aufnahmemittel (36) mit einem Eingang (38), der mit dem Ausgang (10) der analogen Summiermittel (6) verbunden ist, und einem Ausgang (40), der mit dem zweiten Eingang (15) der Anpassungs-Filtermittel (12) verbunden ist, und
daß sie darüber hinaus eine Abgabestufe enthält, umfassend erste Digital/Analog-Abgabemittel (32) mit einem Eingang (30), der mit dem Ausgang (17) der Anpassungs-Filtermittel (12) verbunden ist, und einem Ausgang (34), der ein Signal (An) abgibt, das an den zweiten Eingang (8) der analogen Summiermittel (6) angelegt wird.

3. Vorrichtung nach Anspruch 1, dadurch gekennzeichnet,
daß die Ableitungsmittel (6) Summiermittel vom digitalen Typ sind,
daß sie Mittel zur digitalen Verarbeitung (100) mit einem ersten (4), einem zweiten (14) und einem dritten (15) Eingang sowie einem Ausgang (10) umfaßt, wobei die genannten Mittel zur digitalen Verarbeitung (100) in der Lage sind, die Funktionen der digitalen Summiermittel (6) und der Anpassungs-Filtermittel (12) zu sichern,
daß sie darüber hinaus eine Aufnahmestufe enthält, umfassend dritte Analog/Digital-Aufnahmemittel (118) mit einem ersten Eingang (120), der mit den ersten Auffangmitteln (2) verbunden ist, und einem Ausgang (122), der mit dem ersten Eingang (4) der Mittel zur digitalen Verarbeitung (100) verbunden ist; und vierte Analog/Digital-Aufnahmemittel (136) mit einem Eingang (138), der mit den zweiten Auffangmitteln (16) verbunden ist, und einem Ausgang (140), der mit dem zweiten Eingang (14) der Mittel zur digitalen Verarbeitung (100) verbunden ist.

4. Vorrichtung nach Anspruch 3, dadurch gekennzeichnet, daß sie darüber hinaus eine Abgabestufe enthält, umfassend zweite Digital/Analog-Abgabemittel (132) mit einem ersten Eingang (130), der mit dem Ausgang (10) der Mittel zur digitalen Verarbeitung (100) verbunden ist, und einem Ausgang (134).

5. Vorrichtung nach einem der obigen Ansprüche, dadurch gekennzeichnet, daß die Digitalfiltermittel (12) Mittel vom Typ Digitalsignalprozessor sind und daß der Minimierungsalgorithmus vom Typ der kleinsten mittleren Quadrate ist.

6. Verfahren zum Ableiten eines akustischen Nutzsignals (Un) aus einem zusammengesetzten akustischen Signal (Mn), das Parasitärkomponenten (Pn) enthält, wobei das Verfahren die folgenden Schritte umfaßt:
a) Vorsehen von ersten Auffangmitteln (2), die an einer ersten gewählten Stelle angeordnet sind und in der Lage sind, das zusammengesetzte akustische Signal (Mn) aufzufangen,
b) Vorsehen von zweiten Auffangmitteln (16), die an einer zweiten Stelle angeordnet sind, die entsprechend einer vorbestimmten geometrischen Relation in bezug auf die erste Stelle gewählt ist, und die in der Lage sind, in Echtzeit ein akustisches Referenzsignal (Rn) aufzufangen, das annähernd mit den Parasitärkomponenten (Pn) des zusammengesetzten Signals (Mn) korreliert ist und in der Lage ist, sich von der genannten zweiten Stelle zu der genannten ersten Stelle auszubreiten,
c) Vorsehen von Filtermitteln (12) vom Anpassungstyp mit einem ersten Eingang (14), der mit den zweiten Auffangmitteln (16) verbunden ist, einem zweiten Eingang (15) und einem Ausgang (17),
d) Vorsehen von Ableitungsmitteln (6) mit einem ersten Eingang (4), der mit den ersten Auffangmitteln (2) verbunden ist, einem zweiten Eingang (8), der mit dem Ausgang (17) der Filtermittel (12) verbunden ist, und einem Ausgang (10), wobei das genannte Verfahren dadurch gekennzeichnet ist, daß die zweite Stelle so gewählt wird, daß das Referenzsignal (Rn) keine mit dem Nutzsignal (Un) zusammenhängenden Informationen enthält, und daß es einen Schritt umfaßt, der darin besteht,
e) die Energie des zusammengesetzten akustischen Signals (Mn) in Abhängigkeit von der Energie des akustischen Referenzsignals (Rn) zu minimieren, indem in Echtzeit zumindest einige Filterkoeffizienten angepaßt werden, bis das Signal (Sn), das aus dem Ausgang (10) der Ableitungsmittel (6) hervorgeht, annähernd dem akustischen Nutzsignal (Un) entspricht, das auf selektive Weise keine Parasitärkomponenten (Pn) enthält.

## Claims

1. A device for extracting a useful acoustic signal (Un) from a composite acoustic signal (Mn) comprising nuisance components (Pn), the device being one which comprises:
- first sensor means (2), which are arranged at a first chosen location and are able to pick up the composite acoustic signal (Mn),
- second sensor means (16), which are arranged at a second location chosen according to a predetermined geometric relationship with the first location, and are able to pick up, in real time, a reference acoustic signal (Rn) which is substantially correlated with the nuisance components (Pn) of the composite acoustic signal (Mn) and is capable of propagating from the said second location to the said first location,
- filtering means, of the adaptive type, (12) possessing a first input (14) linked to the second sensor means (16), a second input (15) and an output (17), and
- extraction means (6) possessing a first input (4) linked to the first sensor means (2), a second input (8) linked to the output (17) of the filtering means (12), and an output (10) linked to the second input (15) of the filtering means (12), wherein the second location is chosen so that the reference acoustic signal (Rn) contains no information related to the useful signal (Un) and wherein the filtering means (12) are able to minimize the energy of the composite acoustic signal (Mn) as a function of the energy of the reference acoustic signal (Rn), by adapting at least some of the filtering coefficients in real time, until the signal (Sn) leaving the output (10) of the extraction means (6) corresponds substantially to the useful acoustic signal (Un) selectively rid of the nuisance components (Pn).

2. The device as claimed in claim 1, wherein the extraction means (6) are summator means of the analog type,
wherein it furthermore comprises an acquisition stage comprising first analog/digital acquisition means (18), possessing an input (20) linked to the second sensor means (16) and an output (22) linked to the first input of the adaptive filtering means (12); and second analog/digital acquisition means (36), possessing an input (38) linked to the output (10) of the analog summator means (6) and an output (40) linked to the second input (15) of the adaptive filtering means (12), and
wherein it furthermore comprises a restitution stage comprising first digital/analog restitution means (32), possessing an input (30) linked to the output (17) of the adaptive filtering means (12) and an output (34) which delivers a signal (An) applied to the second input (8) of the analog summator means (6).

3. The device as claimed in claim 1, wherein the extraction means (6) are summator means of the digital type;
wherein it comprises digital processing means (100) possessing first (4), second (14) and third (15) inputs, and an output (10), the said digital processing means (100) being able to carry out the functions of the digital summator means (6) and of the adaptive filtering means (12),
wherein it furthermore comprises an acquisition stage comprising third analog/digital acquisition means (118), possessing an input (120) linked to the first sensor means (2) and an output (122) linked to the first input (4) of the digital processing means (100); and fourth analog/digital acquisition means (136), possessing an input (138) linked to the second sensor means (16) and an output (140) linked to the second input (14) of the digital processing means (100).

4. The device as claimed in claim 3, wherein it furthermore comprises a restitution stage comprising second digital/analog restitution means (132) possessing an input (130), linked to the output (10) of the digital processing means (100), and an output (134).

5. The device as claimed in any one of the preceding claims, wherein the digital filtering means (12) are of the digital signal processor type and wherein the minimization algorithm is of the least mean squares type.

6. A process for extracting a useful acoustic signal (Un) from a composite acoustic signal (Mn) comprising nuisance components (Pn), the process comprising the following steps:
- a) providing first sensor means (2), which are arranged at a first chosen location and are able to pick up the composite acoustic signal (Mn),
- b) providing second sensor means (16), which are arranged at a second location chosen according to a predetermined geometric relationship with the first location, and are able to pick up, in real time, a reference acoustic signal (Rn) which is substantially correlated with the nuisance components (Pn) of the composite acoustic signal (Mn) and is capable of propagating from the said second location to the said first location,
- c) providing filtering means (12), of the adaptive type, possessing a first input (14) linked to the second sensor means (16), a second input (15) and an output (17), and
- d) providing extraction means (6) possessing a first input (4) linked to the first sensor means (2), a second input (8) linked to the output (17) of the filtering means (12), and an output (10), the said process being one wherein the second location is chosen so that the preference signal (Rn) contains no information related to the useful signal (Un), and wherein it comprises a step consisting in:
- e) minimizing the energy of the composite acoustic signal (Mn) as a function of the energy of the reference acoust:ic signal (Rn), by adapting at least some of the fil-tering coefficients in real time until the signal (Sn) leaving the output (10) of the extraction means (6) corresponds substantially to the useful acoustic signal (Un) selectively rid of the nuisance components (Pn).
